# FASCICULE DE BREVET EUROPEEN

(11) **EP 0 981 454 B1**
(45) Date de publication et mention de la délivrance du brevet: **12.12.2001**
(21) Numéro de dépôt: 98925506.2
(22) Date de dépôt: 30.04.1998
(51) Int. Cl.: B60C 25/132

(54) **LIGNE D'ASSEMBLAGE D'ENSEMBLES MONTES, AVEC MOYENS DE VERIFICATION**
MONTAGESTRASSE FÜR MONTIERTE BAUGRUPPEN, MIT ÜBERPRÜFUNGSMITTELN
ASSEMBLY LINE OF MOUNTED ASSEMBLIES WITH MEANS FOR VERIFICATION

(30) Priorité: 16.05.1997 FR 9706283
(43) Date de publication de la demande: 01.03.2000
(73) Titulaire: Compagnie Générale des Etablissements MICHELIN-MICHELIN & CIE, 63040 Clermont-Ferrand Cedex 09 (FR)
(72) Inventeur: MENARD, Bernard, F-35580 Guichen (FR); PATURE, Frédéric, F-35480 Saint-Malo-de-Phily (FR); PITOU, Jacques, F-57365 Ennery (FR)
(74) Mandataire: Devaux, Edmond-Yves
(86) Numéro de dépôt international: EP9802550
(87) Numéro de publication internationale: WO9852782

(56) Documents cités:
- WO-A-96/33877
- DE-A- 4 003 848
- GB-A- 2 085 818
- US-A- 2 661 053
- US-A- 4 830 079

## Description

L'invention concerne une ligne d'assemblage de pneumatiques à leurs roues de montage en vue d'obtenir des ensembles montés prêts à être livrés en temps voulu aux clients, généralement constructeurs de véhicules automobiles. Elle concerne plus particulièrement les moyens destinés à mettre en oeuvre ledit procédé d'assemblage et les moyens de contrôler la qualité des produits.

Une telle ligne d'assemblage comporte, de manière connue par l'usage, des moyens de convoyage tels que bandes transporteuses ou rouleaux métalliques permettant l'acheminement des pneumatiques, des roues, des ensembles montés respectivement, d'un point à un autre de la ligne d'assemblage, lesdits pneumatiques et lesdites roues provenant d'un magasin d'approvisionnement au moyen de palettes de transport adaptées. Les sièges de chaque jante de roue, ladite roue ayant été centrée, ainsi que les bourrelets du pneumatique sont lubrifiés pour faciliter, comme connu, le montage du pneumatique sur la jante de roue, montage qui s'effectue à l'aide d'une machine de montage ou monteuse, les deux bourrelets du pneumatique étant mis en place par pression à l'aide de bras presseurs et d'un galet rotatif. Une cloche de gonflage permet l'introduction du gaz de gonflage de l'ensemble par les intervalles entre talons du pneumatique et roues.

De nombreux documents décrivent des machines de montages ou d'assemblage de pneumatiques avec leurs jantes. Un exemple d'une telle machine est décrit dans le brevet US 2 661 053, correspondant au préambule de la revendication 1. Une machine plus perfectionnée est décrite dans le brevet US 4 830 079 (correspondant au préambule de la revendication 6), et comprend un mécanisme pour monter les pneumatiques sur leurs jantes sans se soucier des dimensions de jantes que ce soit le diamètre ou la largeur hors-tout, les dimensions étant détectées avant montage.

L'ensemble monté, gonflé à la pression recommandée par le client est alors convoyé vers une machine de mise en place des talons de pneumatique, machine qui, par pression sur les flancs dudit pneumatique, permet une légère rotation des bourrelets et leur repositionnement sous l'effet de la pression de gonflage. L'ensemble monté, équilibré sur une machine d'équilibrage, est alors convoyé sur des bandes transporteuses ou tapis à rouleaux vers un magasin de stockage, d'où il sera prélevé pour livraison aux constructeurs.

Les pneumatiques et les roues, à leur arrivée sur les moyens de convoyage en début de chaîne de montage, ne sont pas vérifiés en totalité quant à leur conformité dimensionnelle : seules des cellules photoélectriques signalent leur présence ou absence.

La livraison d'ensembles montés de qualité à un constructeur impose que l'appariement de la roue au pneumatique est bien conforme à la demande du constructeur client, c'est-à-dire impose que le bon pneumatique soit monté sur la bonne roue. De même, l'ensemble monté sera de qualité s'il correspond dimensionnellement à ce qui est demandé et s'il est gonflé à la pression recommandée par le constructeur.

Afin de satisfaire ces exigences, la ligne ou chaîne d'assemblage d'ensembles montés, conforme à l'invention selon la revendication 1, comprenant une machine de montage du pneumatique sur la roue, un dispositif de gonflage de l'ensemble monté, une machine de mise en place des talons de bourrelets de pneumatique ainsi qu'une machine d'équilibrage, est caractérisée en ce qu'elle comprend en outre au moins un moyen de vérification de la conformité du diamètre du pneumatique à monter, et un moyen de vérification de la conformité des dimensions de la roue, de sorte que l'appariement de la roue au pneumatique soit conforme à la demande d'ensemble monté par le client constructeur.

Un moyen de mesure du diamètre du pneumatique, diamètre mesuré à la pointe du bourrelet, peut avantageusement consister en des ensembles de cellules photoélectriques, placées en blocs au-dessus et au-dessous du pneumatique posé à plat et centré sur un support. L'occultation desdites cellules permet en fonction du nombre de cellules occultées la reconnaissance du diamètre du pneumatique. L'invention comprend aussi un dispositif selon la revendication indépendante 6.

Quant au moyen de vérification de la conformité de la roue de montage, il permet de mesurer simultanément la largeur hors-tout de la jante de roue et le galbe du disque de roue, tout en contrôlant en même temps le diamètre de la jante, et les trois mesures ci-dessus étant suffisantes pour caractériser et reconnaître une roue pour constructeur de véhicules. Les moyens mis en oeuvre pour réaliser de telles mesures sont réunies en un seul dispositif comprenant :
- un système de centrage équipé principalement d'un ensemble came-capteurs, et plus précisément un système de centrage composé d'un bras de soutien de galets centreurs sur lequel est fixée une tige coudée dont l'extrémité est susceptible de se mouvoir dans la fente d'un bras pouvant être mis en rotation autour d'un axe fixe, ledit bras étant muni à son extrémité d'une plaque métallique ou came, de forme circulaire et de faible largeur, ladite plaque étant susceptible par rotation autour de l'axe d'être positionnée en face d'un ou plusieurs capteurs à induction solidaires d'un bâti, ledit système permettant le contrôle de la conformité du diamètre de la roue, et
- un appareil à deux unités de guidage indépendantes, sur lesquelles sont montés des ensembles palpeurs-capteurs, lesdits palpeurs étant destinés à être appliqués sur un des rebords de jante et sur le disque respectivement, .et plus précisément, un appareil composé d'une première unité de guidage permettant au moyen d'un vérin et de tiges de guidage le déplacement vertical d'un support munie sur ses bords d'un palpeur destiné à être appliqué sur un des rebords de jante J, le déplacement vertical étant mesuré grâce à un capteur à ultrasons, et d'une deuxième unité de guidage indépendante de la première mais solidaire du support, et permettant au moyen d'un vérin et de tiges de guidage le déplacement vertical d'une plaque support, sur laquelle est monté un palpeur destiné à être appliqué sur le disque D de la roue R, un potentiomètre linéaire permettant de mesurer le déplacement du support.

Il est avantageux que la ligne d'assemblage comprenne en outre un moyen de détection d'ensemble monté non conforme ; ledit moyen peut consister en un dispositif comprenant un système de centrage de l'ensemble monté et d'un système de mesure composé principalement d'un palpeur ,enfoncé dans un des flancs du pneumatique avec une force constante et associé à un capteur apte à mesurer ladite profondeur d'enfoncement.

Les caractéristiques et avantages de l'invention seront mieux compris à l'aide de la description qui suit et qui se réfère au dessin illustrant à titre non limitatif un exemple d'exécution, dessin sur lequel :
- La figure 1 représente schématiquement l'ensemble des machines de la ligne d'assemblage du pneumatique avec la localisation sur ladite ligne des moyens de vérification conformes à l'invention,
- la figure 2A représente schématiquement, vu selon un plan radial du pneumatique, le dispositif destiné à mesurer le diamètre intérieur dudit pneumatique, alors que la figure 2B est une vue de dessus du même dispositif,
- les figures 3A à 3C représentent schématiquement le dispositif permettant le contrôle de conformité de la roue,
- La figure 4 est un schéma de l'appareil de contrôle de conformité de l'ensemble monté avant livraison au client.

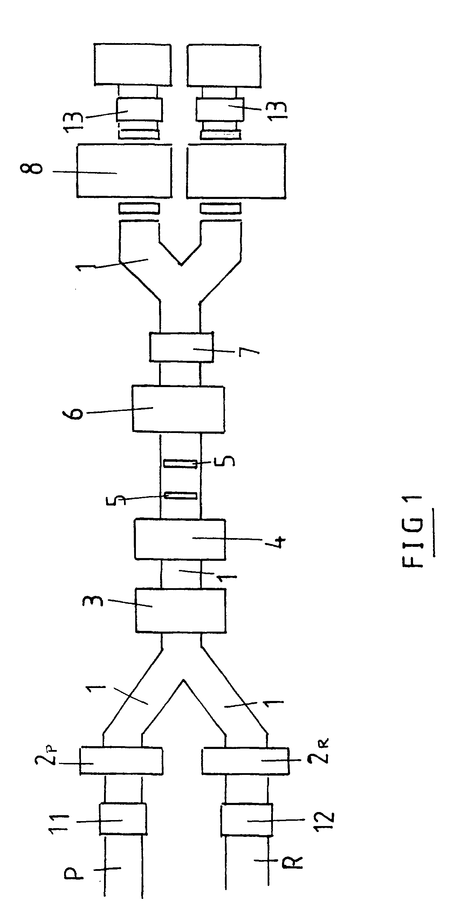

Des moyens d'approvisionnement (figure 1) respectivement en roues R et en pneumatiques P alimentent des convoyeurs d'acheminement (1) desdits pneumatiques P et desdites roues R. Le convoyeur relatif aux pneumatiques P transporte ces derniers vers un dispositif de mesure de diamètre (11), lequel est localisé sur la chaîne d'assemblage avant le poste de lubrification (2P) des bourrelets. Le convoyeur relatif aux roues R achemine ces dernières vers une machine de contrôle (12) des roues, localisée sur la chaîne d'assemblage avant le poste (2R) de lubrification des roues. Les convoyeurs (1) ci-dessus se réunissent en un seul avant la machine de montage ou monteuse (3), en présentant le pneumatique P sur la roue R. Le pneumatique P étant monté et créant avec la roue R un ensemble E non gonflé, le poste de gonflage, en l'occurrence une cloche de gonflage (4) permet ledit gonflage par introduction du gaz de gonflage entre les talons du pneumatique et les sièges de jante J de roue R. L'ensemble E ressort du poste de gonflage (4) sur un convoyeur (1) à bandes transporteuses entre lesquelles sont disposées une ou plusieurs rampes de rideaux d'air (5), permettant le nettoyage des flancs et bourrelets du pneumatique P. Une machine de mise en place des talons (6) et une équilibreurs (7) permettent d'obtenir un ensemble E équipé des masses compensatrices et pouvant être stocké dans un magasin (8) avant livraison au client. Entre la sortie du magasin (8) et l'entrée dans les moyens adaptés au transport des ensembles E est disposé l'appareil (13) de contrôle de la conformité de l'ensemble monté E à livrer.

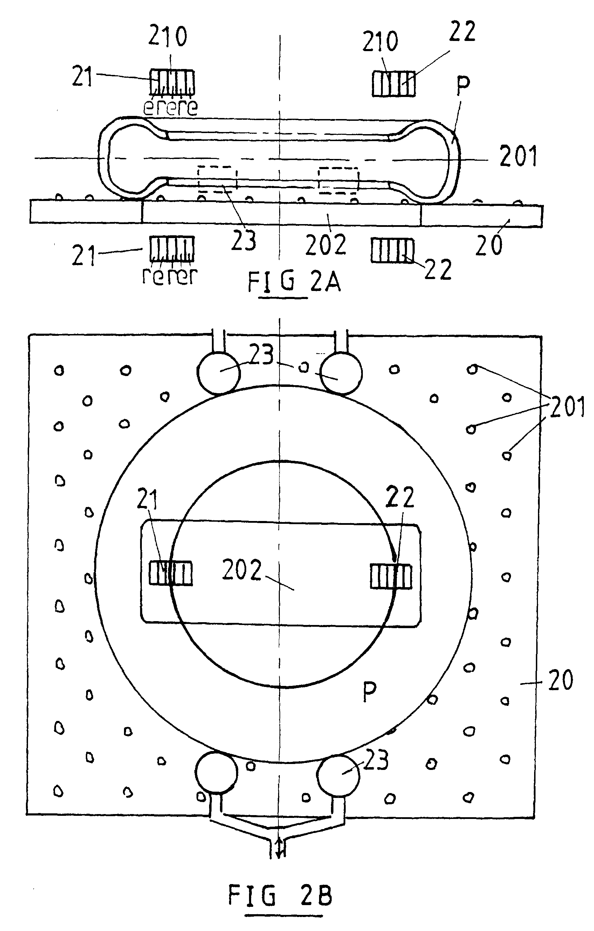

La figure 2A, vue dans un plan radial, et la figure 2B, vue de dessus, montrent le pneumatique P posé sur une table (20) à billes (201), facilitant le déplacement du pneumatique non encore gonflé et, en particulier le centrage dudit pneumatique au moyen de quatre galets pressures (23) dont le déplacement est assuré par un unique vérin (non représenté). La table (20) est munie d'une ouverture (202) assez large pour permettre la mise et le positionnement d'un ensemble amont (21) de cellules photoélectriques (210) et d'un ensemble aval (22) des dites cellules. Si, dans le cas décrit, chaque ensemble est composé de cinq cellules (210), le nombre n desdites cellules peut être différent, puisque choisi en fonction de la gamme de diamètres à mesurer. Un ensemble de cellules, par exemple (21), présente la particularité suivante : la partie supérieure de l'ensemble comprend trois émetteurs-récepteurs e et deux réflecteurs r alors que la partie inférieure comprend trois réflecteurs et deux émetteurs, chaque émetteur e étant disposé à la verticale d'un réflecteur r. Cet arrangement, le pas des éléments de cellules étant de 25,4 mm, c'est-à-dire 1 pouce (la différence de diamètres entre jantes consécutives dans la gamme de pneumatiques pour véhicules de tourisme dans le cas présent étant d'un pouce), permet que chaque faisceau lumineux atteigne bien le réflecteur correspondant et non le réflecteur de la cellule adjacente. Le nombre de cellules (210) occultées d'une part en amont, d'autre part en aval, permet la reconnaissance du diamètre intérieur du pneumatique P, mesuré au niveau des pointes de bourrelets.

Le dispositif, destiné à contrôler la conformité des dimensions de la roue R, et en particulier la largeur hors-tout A de la jante J de roue R, telle que définie par les normes internationales (TRA, ETRTO, par exemple), le galbe G du disque D de roue, définie comme étant la distance au plan équatorial de la roue R des parties les plus éloignées du disque D, et en dernier lieu le diamètre d de la roue R, a la particularité de réaliser les trois opérations simultanément. Ledit dispositif (12) comprend un appareil (120) qui comporte un vérin supérieur (30) permettant le déplacement d'un plateau supérieur (31) armé de tiges de guidage (310), se mouvant à travers des douilles de guidage (320) d'un plateau médian (32) et transmettant le mouvement à un plateau inférieur ou support (33). Ledit plateau, (33) de forme rectangulaire, si vu de dessus, et dont la longueur est supérieure au diamètre hors-tout de la roue R la plus grande de la gamme à mesurer, a ses deux bords (330) munis chacun d'un palpeur (331) en matière plastique, en l'occurrence du polyamide 6 moulé produit sous le nom d'Ertalon, permettant d'éviter l'endommagement des roues. Le plateau inférieur (33) présente en son milieu un évidement radial (332), afin de permettre l'insertion et le mouvement d'une plaque support (43) de forme rectangulaire perpendiculaire à la forme rectangulaire du support (33) et dont la largeur 1 est inférieure à la largeur l'de l'évidement (332). La plaque support (43) est partie intégrante du mécanisme destiné à mesurer le galbe G de roue R, mécanisme comprenant un vérin (40), solidaire du plateau (33), et sa tige (410) permettant le déplacement de la plaque (43), ladite plaque étant reliée à deux tiges de guidages (420) assurant le déplacement relatif de la plaque (43) par rapport au support (33), lesdites tiges étant munies d'une part à leurs extrémités supérieures de butées (421) prenant appui sur les douilles de guidage (422), et d'autre part de ressorts (423) pour permettre le retour en position normale de la plaque (43). Ladite plaque (43) est aussi recouverte à sa partie inférieure d'un palpeur (431) en matière plastique.

Alors que la mesure du déplacement vertical du support (33), la mesure de la largeur hors-tout A de la jante J de roue R se faisant par différence entre la distance initiale L entre l'extrémité radiale du palpeur (331) et la table d'appui (50) et le déplacement L0 du palpeur, est réalisée au moyen d'un capteur à ultrasons (34), l'obstacle réfléchissant étant une rondelle (35) solidaire de la tige de vérin (30), la mesure du déplacement vertical du palpeur (431) est réalisée par l'intermédiaire d'un potentiomètre linéaire sous alimentation de 10 volts.

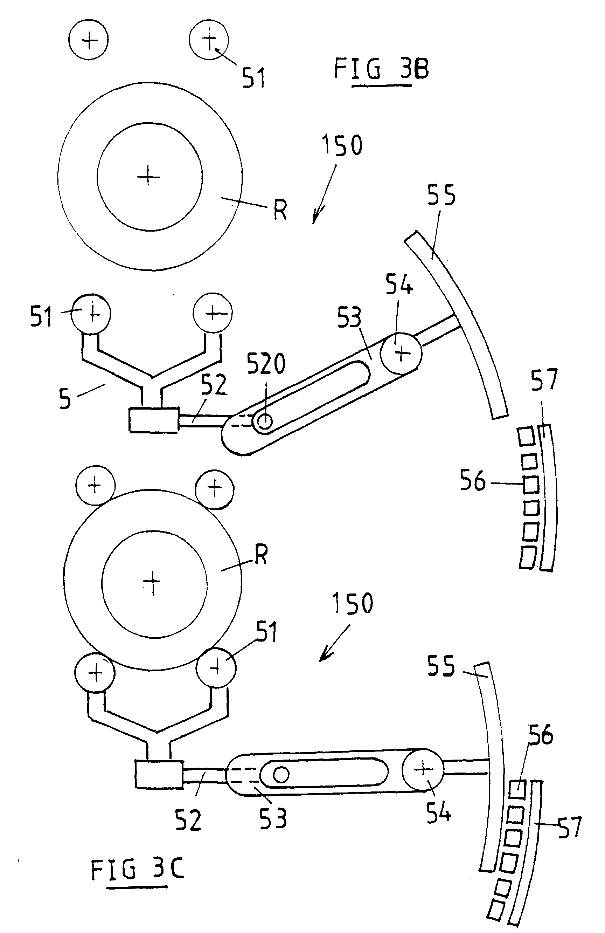

Le dispositif de contrôle de la conformité des dimensions de la roue R comprend aussi un système de centrage (150) composé de galets centreurs (51) (figures 3B et 3C). Sur le bras de soutien de deux galets est fixée une tige (52) coudée dont l'extrémité (520) est susceptible de se mouvoir dans la fente d'un bras (53) pouvant être mis en rotation autour d'un axe fixé (54). Le bras (53) est munie à son extrémité d'une plaque métallique ou came (55) de forme circulaire et de faible largeur, ladite plaque étant susceptible par rotation autour de l'axe (54) d'être positionnée en face d'un ou plusieurs capteurs à induction (56) solidaires d'un bâti (57).

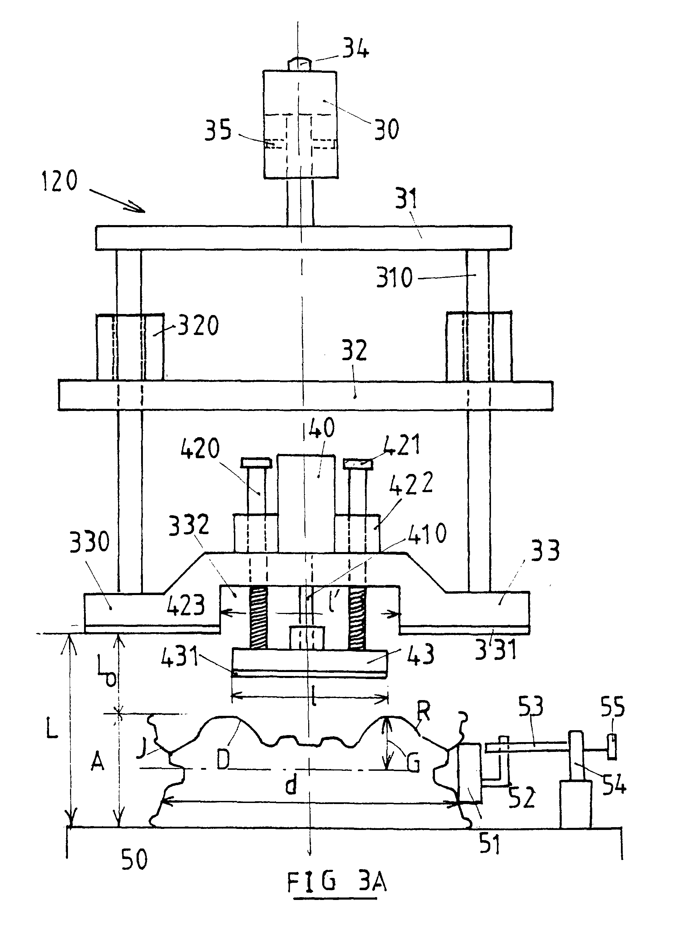

Les galets presseurs (51) qui, sous l'effet d'un vérin (non représenté), sont appliqués sur la jante J de roue (figure 3C) à un endroit précis de la dite jante (figure 3A), entraînent dans leur mouvement de translation vers la roue R la tige (52) et provoquent la mise en rotation de la plaque (55) qui, en fonction du diamètre du cercle d'impact des galets sur la jante de roue, est amenée en regard d'un ou plusieurs capteurs (56) à induction. Le nombre de capteurs (56) mis en action permet la reconnaissance de la roue correcte en diamètre ou la présence d'une roue non adaptée.

La ligne de montage, conforme à l'invention, comporte en dernier lieu et positionné à la sortie du magasin avant conditionnement dans des moyens de transport adaptés, un dispositif (13) susceptible de déceler les anomalies de pression de gonflage du pneumatique P de l'ensemble E, mais aussi de toute anomalie pouvant être révélée par une différence de forme et/ou de raideur des flancs du pneumatique P, par exemple un pneumatique non conforme en largeur de boudin, par exemple un pneumatique non conforme dans sa structure interne, mais aussi une jante J conforme en dimensionnement, mais de forme irrégulière selon la circonférence.

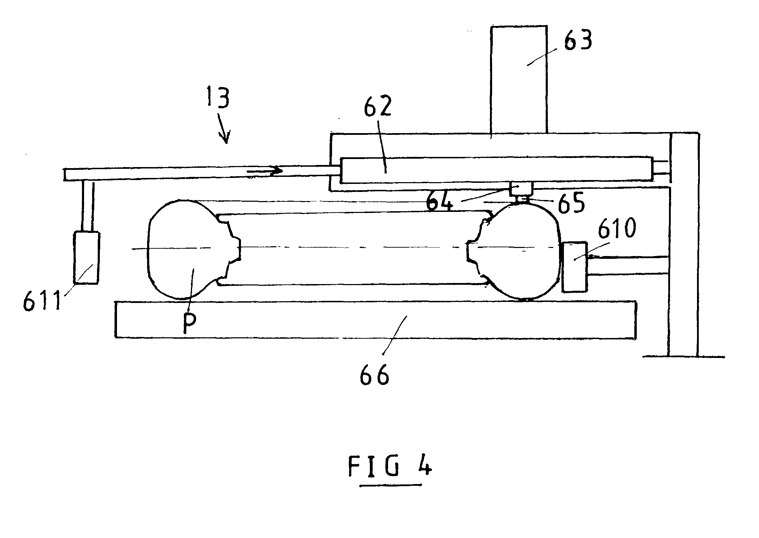

Le dispositif (13) (figure 4) comprend un système de centrage et un système de mesure. Le système de centrage est composé de quatre galets centreurs (61), deux étant fixes (610) et solidaires du bâti du dispositif, les deux autres (611) étant mobiles sous l'action d'un vérin (62) solidaire dudit bâti. Le système de mesure comprend un vérin (63) permettant le déplacement vertical de la tige (64) munie à son extrémité d'un palpeur circulaire (65) en matière plastique, ledit palpeur pouvant, après contact avec le flanc supérieur du pneumatique P posé sur une table à rouleaux (66), s'enfoncer dans ledit flanc sensiblement au niveau de la largeur axiale maximale du pneumatique. L'enfoncement du palpeur (65) est réalisé à force constante, constance permise par la maîtrise parfaite de l'alimentation en air du vérin (63). La mesure de l'enfoncement ou du déplacement vertical du palpeur se fait au moyen d'un potentiomètre linéaire. La valeur mesurée doit se trouver dans des tolérances préétablies statistiquement, et, dans le cas contraire, une deuxième mesure est réalisée pour confirmation. Selon la réponse, le produit est rejeté ou non.

## Revendications

1. Ligne ou chaîne d'assemblage d'ensembles montés E, comprenant une machine de montage (3) du pneumatique P sur la roue R, un dispositif de gonflage (4) de l'ensemble monté E, une machine (6) de mise en place des talons de bourrelets de pneumatique P ainsi qu'une machine d'équilibrage (7), **caractérisée en ce qu'**elle comprend en outre au moins un moyen (11) de vérification de la conformité du diamètre du pneumatique P à monter, et un moyen (12) de vérification de la conformité des dimensions de la roue R, de sorte que l'appariement de la roue R au pneumatique P soit conforme à la demande d'ensemble monté E par le client constructeur.

2. Ligne d'assemblage selon la revendication 1, **caractérisée en ce qu'**elle comprend en outre et en fin de chaîne un moyen (13) de détection d'ensemble monté E non conforme.

3. Ligne d'assemblage selon l'une des revendications 1 ou 2, **caractérisée en ce que** le moyen (11) de vérification de la conformité du diamètre du pneumatique P à monter est un moyen de mesure dudit diamètre, diamètre mesuré à la pointe du bourrelet, moyen qui consiste en des ensembles amont (21) et aval (22) de cellules photoélectriques (210), placées en blocs au-dessus et au-dessous du pneumatique P posé à plat et centré sur un support évidé (20) à billes (201), l'occultation desdites cellules (210) permettant en fonction du nombre de cellules occultées la reconnaissance du diamètre du pneumatique.

4. Ligne d'assemblage selon l'une des revendications 1 ou 2, **caractérisée en ce que** le moyen (12) de vérification de la conformité de la roue R, permettant de mesurer simultanément la largeur hors-tout A de la jante J de roue R et le galbe G du disque D de roue R, tout en contrôlant en même temps le diamètre d de la jante J, consiste en un dispositif comprenant un système de centrage (150) armé d'un ensemble came (55) avec capteurs (56) pour contrôler la conformité du diamètre de roue, et un appareil (120) à deux unités de guidage (30, 31, 310, 320, 32,33 et 40, 410, 420, 422, 43), sur lesquelles sont montés des palpeurs (331 et 431) étant destinés à être appliqués sur un des rebords de jante J et sur le disque D respectivement, des capteurs permettant de mesurer les déplacements des supports (33 et 43).

5. Ligne d'assemblage selon la revendication 2, **caractérisée en ce que** ledit moyen (13) de détection est un dispositif comprenant un système de centrage (66, 610, 611, 62) du pneumatique P et d'un système de mesure (63, 64, 65) composé d'un palpeur (65) enfoncé dans un des flancs du pneumatique P avec une force constante et associé à un capteur apte à mesurer ladite profondeur d'enfoncement.

6. Dispositif (12) destiné à contrôler, sur une ligne d'assemblage de pneumatiques P à leurs roues R, la conformité de la roue R en mesurant simultanément la largeur hors-tout A de la jante J de roue R et le galbe G du disque D de roue R, tout en contrôlant en même temps le diamètre d de la jante J, et ainsi permettre l'appariement de la roue R au pneumatique P en conformité avec la demande du client constructeur, **caractérisé en ce qu'**il comprend :
d'une part un système de centrage (150) composé d'un bras de soutien de galets centreurs (51) sur lequel est fixée une tige (52) coudée dont l'extrémité (520) est susceptible de se mouvoir dans la fente d'un bras (53) pouvant être mis en rotation autour d'un axe fixe (54), ledit bras (53) étant muni à son extrémité d'une plaque métallique ou came (55) de forme circulaire et de faible largeur, ladite plaque étant susceptible par rotation autour de l'axe (54) d'être positionnée en face d'un ou plusieurs capteurs à induction (56) solidaires d'un bâti (57), et
d'autre part un appareil (120) composé d'une première unité de guidage (30, 31, 310, 320, 32,33) permettant au moyen d'un vérin (30) et de tiges de guidage (310) le déplacement vertical d'un support (33) munie sur ses bords d'un palpeur (331) destiné à être appliqué sur un des rebords de jante J, le déplacement vertical étant mesuré grâce à un capteur à ultrasons (34), et d'une deuxième unité de guidage (40, 410, 420, 422, 43) indépendante de la première mais solidaire du support (33), et permettant au moyen d'un vérin (40) et de tiges de guidage (420) le déplacement vertical d'une plaque support (43), sur laquelle est monté un palpeur (431) destiné à être appliqué sur le disque D de la roue R, un potentiomètre linéaire permettant de mesurer le déplacement du support (43).

## Patentansprüche

1. Montagestraße oder Montageband für montierte Baugruppen E, mit einer Maschine (3) zur Montage des Reifens P auf dem Rad R, einer Vorrichtung (4) zum Aufpumpen der montierten Baugruppe E, einer Maschine (6) zum Anordnen der Wulstansätze des Reifens P sowie einer Auswuchtmaschine (7), **dadurch gekennzeichnet, daß** sie außerdem Mittel bzw. eine Einrichtung (11) zur Überprüfung der Gleichförmigkeit des Durchmessers des zu montierenden Reifens P und Mittel bzw. eine Einrichtung (12) zur Überprüfung der Übereinstimmung der Abmessungen des Rades R aufweist, so daß so die Zuordnung des Rades R zum Reifen P mit der Anforderung an die montierte Baugruppe E durch den den Kunden bildenden Hersteller übereinstimmt.

2. Montagestraße nach Anspruch 1, **dadurch gekennzeichnet, daß** sie außerdem am Ende des Bandes eine Einrichtung (13) zum Erfassen einer nicht übereinstimmenden Baugruppe E aufweist.

3. Montagestraße nach einem der Ansprüche 1 oder 2, **dadurch gekennzeichnet, daß** die Einrichtung (11) zur Überprüfung der Übereinstimmung des Durchmessers des zu montierenden Reifens P eine Einrichtung zur Messung des genannten Durchmessers ist, und zwar des Durchmessers, der an der Spitze des Wulstes gemessen wird, wobei die Einrichtung aus einer oberen (21) und unteren (22) Gruppe aus Fotozellen (210) besteht, die blockweise über und unter dem Reifen P angeordnet sind, der flach und zentriert auf einem vertieften Träger (20) mit Kugeln (201) aufgelegt ist, und wobei die Verdunkelung der genannten Zellen (210) in Abhängigkeit von der Zahl der verdunkelten Zellen das Erkennen des Durchmessers des Reifens gestattet.

4. Montagestraße nach einem der Ansprüche 1 oder 2, **dadurch gekennzeichnet, daß** die Einrichtung (12) zur Überprüfung der Übereinstimmung des Rades R, die es gestattet. gleichzeitig die Breite über alles A der Felge J des Rades R und die Kontur G der Scheibe D des Rades R zu messen, während sie gleichzeitig den Durchmesser d der Felge J überwacht, aus einer Vorrichtung besteht, die ein Zentriersystem (150) aufweist, das mit einer Anordnung aus einem Kurvenelement (55) mit Meßfühlern (56) versehen ist, um die Übereinstimmung des Raddurchmessers zu überwachen, und einem Gerät (120) mit zwei Führungseinheiten (30, 31, 310, 320, 32, 33 und 40, 410, 420, 422, 43), auf denen Taster bzw. Fühler (331 und 431) angebracht sind, die dazu bestimmt sind, auf den Rändern der Felge J bzw. auf der Scheibe D aufgesetzt zu werden, wobei Meßfühler es gestatten, die Versetzungen der Träger (33 und 43) zu messen.

5. Montagestraße nach Anspruch 2, **dadurch gekennzeichnet, daß** die genannte Erfassungseinrichtung (13) eine Vorrichtung ist, die ein Zentriersystem (66, 610, 611, 62) für den Reifen P und ein Meßsystem (63, 64, 65) aufweist, das aus einem Taster bzw. Fühler (65) zusammengesetzt ist, der in eine der Flanken des Reifens P mit einer konstanten Kraft eingedrückt wird und einem Meßfühler zugeordnet ist, der dazu eingerichtet ist, die genannte Eindrücktiefe zu messen.

6. Vorrichtung (12), die dazu bestimmt ist, auf einer Straße zur Montage von Reifen P auf ihre Räder R die Übereinstimmung des Rades R dadurch zu überwachen, daß gleichzeitig die Breite A über alles der Felge J des Rades R und die Kontur G der Scheibe D des Rades R gemessen werden, während gleichzeitig der Durchmesser d der Felge J überwacht wird, und so die Zusammenführung des Rades R mit dem Reifen P in Übereinstimmung mit der Anforderung des den Kunden bildenden Herstellers zu gestatten, **dadurch gekennzeichnet, daß** sie die folgenden Merkmale aufweist:
einerseits ein Zentriersystem (150), das aus einem Haltearm für Zentrierrollen (51) zusammengesetzt ist, auf dem eine abgewinkelte Stange (52) befestigt ist, deren Ende (520) imstande ist, sich im Schlitz eines Armes (53) zu bewegen, der in Drehung um eine feste Achse (54) versetzt werden kann, wobei der genannte Arm (53) an seinem Ende mit einer Metallplatte oder einem Kurvenelement (55) mit kreisartiger Form und geringer Breite versehen ist, wobei die genannte Platte durch Drehung um die Achse (54) imstande ist, einem oder mehreren Induktionsfühlern (56), die mit einem Maschinengestell (57) fest verbunden sind, gegenüberliegend angeordnet zu werden, und
andererseits ein Gerät (120), das aus einer ersten Führungseinheit (30, 31, 310, 320, 32, 33) zusammengesetzt ist, das mittels eines Stellgliedes bzw. Zylinders (30) und Führungsstangen (310) die vertikale Verlagerung eines Trägers (33) gestattet, der auf seinen Rändern mit einem Taster bzw. Fühler (331) versehen ist, der dazu bestimmt ist, auf einen der Ränder der Felge J aufgesetzt zu werden, wobei die vertikale Verlagerung mit einem Ultraschall-Meßfühler (34) gemessen wird, und einer zweiten Führungseinheit (40, 410, 420, 422, 43), die von der ersten unabhängig, aber fest mit dem Träger (33) verbunden ist und mittels eines Stellgliedes bzw. Zylinders (40) und Führungsstangen (420) die vertikale Verlagerung einer Trägerplatte (43) gestattet, auf der ein Taster bzw. Fühler (431) angebracht ist, der dazu bestimmt ist, auf die Scheibe D des Rades R aufgesetzt zu werden, wobei ein lineares Potentiometer die Messung der Verlagerung der Trägerplatte (43) gestattet.

## Claims

1. An assembly line for mounted assemblies E, comprising a machine (3) for mounting the tyre P on the wheel R, a device (4) for inflating the mounted assembly E, a machine (6) for placement of the bead heels of the tyre P and a balancing machine (7), **characterised in that** it further comprises at least one means (11) for checking the conformity of the diameter of the tyre P to be mounted and a means (12) for checking the conformity of the dimensions of the wheel R, such that the matching of the wheel R to the tyre P is in accordance with the requirement for a mounted assembly E of the manufacturing customer.

2. An assembly line according to Claim 1, **characterised in that** it furthermore comprises, at the end of the line, a means (13) for detecting non-conforming mounted assemblies E.

3. An assembly line according to one of Claims 1 or 2, **characterised in that** the means (11) for checking the conformity of the diameter of the tyre P to be mounted is a means for measuring said diameter, which diameter is measured at the toe of the bead, which means consists of upstream (21) and downstream (22) assemblies of photoelectric cells (210), placed in blocks above and below the tyre P when it is placed flat and centred on a recessed support (20) having ball bearings (201), the blacking-out of said cells (210) making it possible to recognise the diameter of the tyre according to the number of cells blacked out.

4. An assembly line according to one of Claims 1 or 2, **characterised in that** the means (12) for checking the conformity of the wheel R, which makes it possible to measure simultaneously the overall width A of the rim J of the wheel R and the outline G of the disc D of the wheel R, while checking at the same time the diameter d of the rim J, consists of a device comprising a centring system (150) equipped with a cam assembly (55) with detectors (56) for checking the conformity of the wheel diameter, and an apparatus (120) having two guide units (30, 31, 310, 320, 32, 33 and 40, 410, 420, 422, 43), on which sensors (331 and 431) are mounted which are intended to be applied to one of the flanges of the rim J and on the disc D respectively, detectors making it possible to measure the displacement of the supports (33 and 43).

5. An assembly line according to Claim 2, **characterised in that** said detection means (13) is a device comprising a centring system (66, 610, 611, 62) for the tyre P and a measuring system (63, 64, 65) composed of a sensor (65) which is driven into one of the sidewalls of the tyre P with a constant force and associated with a detector capable of measuring said penetration depth.

6. A device (12) for checking, on an assembly line for tyres P and wheels R, the conformity of the wheel R by simultaneously measuring the overall width A of the rim J of wheel R and the outline G of the disc D of wheel R, while at the same time checking the diameter d of the rim J, and thus permitting proper matching of the wheel R to the tyre P in conformity with the requirement of the manufacturing customer, **characterised in that** it comprises:
firstly a centring system (150) composed of a support arm for centring rollers (51), on which a bent rod (52) is fastened, the end (520) of which is capable of moving into the slot of an arm (53) that can be rotated about a fixed pin (54), said arm (53) being equipped at its end with a metal plate or cam (55), of circular shape and low width, said plate being capable, by rotation about the pin (54), of being positioned opposite one or more induction detectors (56) integral with a frame (57), and
secondly an apparatus (120) composed of a first guide unit (30, 31, 310, 320, 32, 33) making possible, by means of a piston-cylinder unit (30) and guide rods (310), the vertical displacement of a support (33) equipped on its edges with a sensor (331) designed to be applied to one of the flanges of the rim J, the vertical displacement being measured by means of an ultrasonic detector (34), and a second guide unit (40, 410, 420, 422, 43) independent of the first but integral with the support (33) and making possible, by means of a piston-cylinder unit (40) and guide rods (420), the vertical displacement of a support plate (43), on which is mounted a sensor (431) designed to be applied to the disc D of the wheel R, a linear potentiometer making it possible to measure the displacement of the support (43).
